# NEUE EUROPÄISCHE PATENTSCHRIFT

(11) **EP 3 691 945 B2**
(45) Veröffentlichungstag und Bekanntmachung des Hinweises auf die Entscheidung über den Einspruch: **17.06.2026**
(45) Hinweis auf die Patenterteilung: 25.08.2021
(21) Anmeldenummer: 18785277.7
(22) Anmeldetag: 28.09.2018
(51) Int. Cl.: B60T 17/22

(54) **BREMSSYSTEM FÜR EIN KRAFTFAHRZEUG UND VERFAHREN ZUM BETREIBEN EINES BREMSSYSTEMS**
VEHICLE BRAKE SYSTEM AND METHOD OF OPERATING
SYSTÈME DE FREIN DE VÉHICULE ET MÉTHODE D'EMPLOI

(30) Priorität: 06.10.2017 DE 102017217856
(43) Veröffentlichungstag der Anmeldung: 12.08.2020
(73) Patentinhaber: Volkswagen Aktiengesellschaft, 38440 Wolfsburg (DE)
(72) Erfinder: BLUMENTRITT, Marc, 38104 Braunschweig (DE); PROTZE, Christopher, 38442 Wolfsburg (DE); ALAGÖZ, Halit, 30519 Hannover (DE)
(74) Vertreter: Hofstetter, Schurack & Partner
(86) Internationale Anmeldenummer: PCT/EP2018/076382
(87) Internationale Veröffentlichungsnummer: WO 2019/068570

(56) Entgegenhaltungen:
- EP-A1- 3 363 698
- WO-A1-2009/015962
- WO-A1-2015/036393
- WO-A1-2016/110464
- WO-A1-2016/142030
- CA-A- 1 245 744
- DE-A1- 10 325 650
- DE-A1- 10 359 875
- DE-A1- 102004 009 469
- DE-A1- 102006 048 910
- DE-A1- 102007 036 259
- DE-A1- 102007 050 221
- DE-A1- 102008 003 379
- DE-A1- 102008 004 206
- DE-A1- 102008 008 555
- DE-A1- 102011 014 072
- DE-A1- 102011 086 241
- DE-A1- 102012 025 400
- DE-A1- 102012 202 175
- DE-A1- 102013 203 775
- DE-A1- 102014 221 007
- DE-A1- 102015 200 928
- DE-A1- 102016 208 766
- DE-A1- 19 838 885
- US-A1- 2015 151 726
- US-A1- 2016 009 257
- "Redundanz (Technik) ", WIKIPEDIA, 20 September 2017 (2017-09-20), XP055929408, Retrieved from the Internet <URL:https://de.wikipedia.org/w/index.php?title=Redundanz_(Technik)&oldid=169272464>
- "Automated Driving Systems 2.0 - A vision for safety", NHTSA BROCHURE, 1 September 2017 (2017-09-01), XP055929423
- ECE-R13, gesetzliche Fahrzeug-Vorschrift zur Auslegung von Bremssystemen; der Nachweis erfolgt durch das Handbuch "Vehicle Regulation, Fahrzeug Vorschriften, Ausgabe 2004" der Wabco Vehicle Control Systems. Eine ausfuhrliche Fassung ist z.B. nachschlagbar unter https://unece.ora/fileadmin/DAM/trans/main/wp29/wp29reas/r013r6e.pdf https://eur-lex.europa.eu/legal-content/DE/TXT/PDF/?uri=CELEX:4201 6X0218(01 )&from=en und https://de.wikipedia.org/wiki/ECE-Regelungen
- Zeitungsartikel der Washington Post uber waymo-safety-report-2017 vom 12.10.2017
- Waymo-safety-report-2017
- ISO 26262 Funktionale Sicherheit fur Strasenfahrzeuge
- Strategy and Architecture of a Safety Concept for Fully Automatic and Autonomous Driving Assistance Systems, 2010 aus IEEE Intelligent Vehicles Symposium University of California, San Diego, CA, USA June 21-24, 2010
- Architecture and System Safety Requirements for Automated Driving,2015 veroffentlicht in Springer International Publishing Switzerland 2015, G. Meyer and S. Beiker (eds.), Road Vehicle Automation 2,Lecture Notes in Mobility, DOI 10.1007/978-3-319-19078-5_4, ISBN:978-3-319- 19078-5 Zu beziehen unter Road Vehicle Automation 2 SpringerLink dort Kapitel 10, d.h. https://link.springer.eom/chapter/10.1007/978-3-319-19078-5 4
- ISO-Norm ISO22178 Intelligent transport systems, Low speed following (LSF) systems, Performance requirements and test procedures

## Beschreibung

Die Erfindung betrifft ein Bremssystem für ein Kraftfahrzeug, ein Verfahren zum Betreiben eines Bremssystems sowie ein Kraftfahrzeug mit einem derartigen Bremssystem.

Bei vielen Fahrerassistenzfunktionen, die zurzeit serienmäßig in Kraftfahrzeuge eingebaut werden, wird der Fahrer des Kraftfahrzeugs im Falle eines Notfalls, zum Beispiel bei einem technischen Defekt der Fahrerassistenzfunktion, als Rückfallebene einbezogen. Das bedeutet, dass wenn ein Fehler während des Betriebs einer Fahrerassistenzfunktion auftritt, eine entsprechende Meldung an den Fahrer ausgegeben wird und dieser die Aufgabe der entsprechenden Fahrerassistenzfunktion übernehmen muss.

Zukünftig wird jedoch bei Fahrerassistenzfunktionen, die auch zum autonomen Steuern oder Fernbedienen eines Kraftfahrzeugs ausgelegt sind, ein Fahrer des Kraftfahrzeugs nicht immer als Rückfallebene einbezogen werden können, da dieser sich zum Beispiel nicht mehr im Kraftfahrzeug befinden wird oder erst zeitlich verzögert eingreifen könnte.

Es ist bereits aus der DE 10 2014 221 007 A1 bekannt, dass bei einer als Staupilot dienenden Fahrerassistenzfunktionen neben einer Standard-Soll-Trajektorie eine zusätzliche Notlauf-Soll-Trajektorie bestimmt wird. Hierfür werden von dem Staupiloten stets zwei Standard-Soll-Trajektorien basierend auf Umfelddaten eines Kraftfahrzeugs ermittelt, diese beiden Soll-Trajektorien miteinander verglichen und eine der beiden Soll-Trajektorien ausgewählt, basierend auf der das Fahrzeug zumindest teilautomatisch geführt wird. Dieses Vorgehen ermöglicht, dass im Falle eines Fehlers in einer der Verarbeitungseinrichtungen des Staupiloten oder im Falle eines Fehlers in einem Bauteil des Kraftfahrzeugs auf die andere, nicht ausgewählte Standard-Soll-Trajektorie zurückgegriffen werden kann und anhand dieser Notlauf-Soll-Trajektorie das Kraftfahrzeug weiter geführt wird.

Aus der gattungsgemäßen WO 2009/015962 A1 ist ein Bremssystem mit Bremssteuereinrichtungen, welche als Primärsystem fungieren, und Radaktoreinrichtungen,als Sekundärsystem bekannt. Liegt eine Notfall in Form eines Fehlers im Primärsystem vor, ist das Sekundärsystem dazu ausgelegt, das Fahrzeug automatisch abzubremsen und zu sichern.

Bei vielen Fahrerassistenzfunktionen, die zumindest eine teilautomatisierte Führung des Kraftfahrzeugs ermöglichen, ist es im Notfall jedoch weniger wichtig, dass der Fahrerassistenzfunktion oder einer anderen Steuereinheit des Kraftfahrzeugs ein Notfallplan vorliegt, gemäß dem das Kraftfahrzeug weiter gelenkt wird. Vielmehr rückt es in den Vordergrund, ein System und ein Vorgehen zu definieren, anhand denen autonom gesteuerte Kraftfahrzeuge im Notfall möglichst schnell und gegebenenfalls unter Berücksichtigung einer aktuellen Verkehrslage in einen Stillstand abgebremst und anschließend im Stillstand gesichert werden können.

Es ist daher Aufgabe der Erfindung, ein System für ein Kraftfahrzeug bereitzustellen, mit dem ein Betreiben des Kraftfahrzeugs mit einer autonom oder ferngesteuerten Fahrzeugfunktion besonders sicher gestaltet wird.

Erfindungsgemäß wird diese Aufgabe durch ein Bremssystem für ein Kraftfahrzeug gelöst, das ein Primärsystem und ein Sekundärsystem umfasst, welche jeweils dazu ausgelegt sind, das Kraftfahrzeug automatisch gemäß einer Notfallfunktion in den Stillstand abzubremsen und danach im Stillstand zu sichern, wobei zumindest das Primärsystem dazu ausgelegt ist, beim Auftreten eines Fehlers in einer zum autonomen Steuern oder Fernbedienen des Kraftfahrzeugs ausgelegten Fahrzeugfunktion die Notfallfunktion durchzuführen, wobei das Sekundärsystem in dem Fall dazu ausgerichtet ist, beim Auftreten eines Fehlers im Primärsystem die Notfallfunktion durchzuführen. Bei dem erfindungsgemäß vorgeschlagenen Bremssystem handelt es sich somit um ein Bremssystem, das aus zwei Teilbremssystemen besteht. Beide Teilbremssysteme, das heißt sowohl das als Primärsystem bezeichnete Hauptbremssystem als auch das als Sekundärsystem bezeichnete Nebenbremssystem sind dazu ausgelegt, ein Kraftfahrzeug entsprechend einer vorgegebenen Bremsroutine anzuhalten und gegen Verrollen zu sichern.

Zudem ist das Primärsystem dazu in der Lage, die vorgegebene Bremsroutine dann durchzuführen, wenn ein Fehler in einer Fahrzeugfunktion auftritt. Bei der Fahrzeugfunktion handelt es sich hierbei um eine Fahrerassistenzfunktion, mit der ein eigenständiges oder aus der Ferne kontrolliertes Steuern des Kraftfahrzeugs möglich ist. Des Weiteren ist vorgesehen, dass das Bremssystem dazu ausgelegt ist, dass im Falle eines Fehlers der Fahrzeugfunktion sowie bei zusätzlichem Auftreten eines Fehlers im Primärsystem das Sekundärsystem anhand der ihm vorgegebenen Bremsroutine das Kraftfahrzeug anhält und im Stillstand hält.

Dieses redundante Bremssystem kann beispielsweise in Kombination mit einer Fahrzeugfunktion, wie zum Beispiel einem Einparkhilfeassistenten oder einer adaptiven Geschwindigkeitsregelanlage, eingesetzt werden. Wird beispielsweise gemäß einer Kundenfunktion ein selbstständiges Einparken eines Kraftfahrzeugs ohne Fahrer an Bord gewünscht, ermöglicht das Bremssystem, dass bei Ausfall der entsprechenden Fahrzeugfunktion, zum Beispiel wenn der Funkkontakt zwischen dem Fernsteuergerät des Fahrers und der Steuereinrichtung der Fahrzeugfunktion abbricht, das Kraftfahrzeug durch das Primärsystem abgebremst und im Stillstand gesichert wird. Im Falle eines zusätzlichen technischen Fehlers im Primärsystem kann das Fahrzeug auch durch das Sekundärsystem, also anhand der vorgegebenen Bremsroutine des Sekundärsystems, angehalten werden.

In weiterer vorteilhafter Ausgestaltung der Erfindung ist vorgesehen, dass die Notfallfunktion bei einer Geschwindigkeit des Kraftfahrzeugs unterhalb von einer vorgegebenen Geschwindigkeit vorsieht, eine Vollbremsung vorzunehmen und das Kraftfahrzeug danach im Stillstand zu sichern. Falls das Kraftfahrzeug also langsamer als eine gewisse Maximalgeschwindigkeit fährt und zumindest eine der genannten Bedingungen für ein Abbremsen und anschließendes Sichern des Kraftfahrzeugs im Stillstand erfüllt ist, ist gemäß der vorgegebenen Bremsroutine vorgesehen, dass das Kraftfahrzeug schnellstmöglich in den Stillstand abgebremst wird und danach gegen Verrollen gesichert wird. Befindet sich das Kraftfahrzeug zum Beispiel in einem Einparkvorgang, der mithilfe eines remotegesteuerten Einparkhilfeassistenten durchgeführt wird, kann nun gemäß der vorgegebenen Bremsroutine ein abruptes Abbremsen des Kraftfahrzeugs vorgenommen werden. Die gemäß der Notfallfunktion durchgeführte Vollbremsung gleicht einer Art Notstopp des Kraftfahrzeugs. So eine Notstoppfunktion ist besonders vorteilhaft, wenn das Fahrzeug ferngesteuert von einer Fahrzeugfunktion eingeparkt wird, das heißt der Fahrzeugführer nicht selbst im Notfall das Fahrzeug abbremsen kann, oder wenn das Fahrzeug von einer Fahrzeugfunktion in einer Spielstraße geführt wird, in der ein möglichst schnelles Anhalten des Kraftfahrzeugs ohne zeitverzögertes Eingreifen des Fahrers sinnvoll ist. Der Geschwindigkeitsbereich, in dem diese Notstoppfunktion vorgesehen ist, liegt im Rangierbereich des Kraftfahrzeugs, das heißt bei Geschwindigkeiten bis vorzugsweise 15 km/h.

Eine weitere vorteilhafte Ausführungsform des erfindungsgemäß vorgeschlagenen Bremssystems sieht vor, dass die Notfallfunktion bei einer Geschwindigkeit des Kraftfahrzeugs größer oder gleich der vorgegebenen Geschwindigkeit vorsieht, das Kraftfahrzeug unter Berücksichtigung einer aktuellen Verkehrssituation in den Stillstand abzubremsen und danach im Stillstand zu sichern. Ab einer gewissen Maximalgeschwindigkeit ist also vorgesehen, dass anhand der vorgegebenen Bremsroutine die aktuelle Verkehrslage berücksichtigt und das Kraftfahrzeug angepasst an diese Verkehrslage abgebremst und danach gegen Verrollen gesichert wird. Wird das Fahrzeug beispielsweise durch eine Fahrzeugfunktion vollautonom über eine Autobahn geleitet, kommt es bei Aktivierung der Notfallfunktion somit nicht zu einer plötzlichen Vollbremsung des Kraftfahrzeugs, sondern zu einem an die aktuelle Geschwindigkeit und an das aktuelle Verkehrsaufkommen angepassten Abbremsvorgang. Die Bremsroutine könnte hierbei vorgeben, in welcher Zeit und in welcher Distanz das Kraftfahrzeug auf eine gewisse Geschwindigkeit abgebremst wird bis es im Stillstand steht. Zur Bestimmung der Notfallfunktion können hierfür Informationen von verschiedenen Sensoren, zum Beispiel von Außenkameras des Kraftfahrzeugs, genutzt werden, mittels welchen die aktuelle Verkehrssituation überwacht werden kann. Ebenfalls möglich ist, dass die Notfallfunktion unter Berücksichtigung von Daten von Car-to-Car-Kommunikation oder Car-to-X-Kommunikation bestimmt wird. Bei höheren Fahrzeuggeschwindigkeiten, das heißt typischerweise ab Geschwindigkeiten von vorzugsweise 15 km/h, ist bei einer Fehlfunktion der Fahrzeugfunktion oder des Primärsystems also vorgesehen, das Kraftfahrzeug gemäß eines definierten Notlaufs abzubremsen und anschließend im Stillstand zu sichern. Durch ein solches, an die aktuelle Verkehrssituation angepasstes Abbremsen des Kraftfahrzeugs kann die Wahrscheinlichkeit für Folgeunfälle, zum Beispiel durch Auffahrunfälle anderer Verkehrsteilnehmer im Vergleich zu einem Notstopp-Vorgehen reduziert werden.

In weiterer Ausgestaltung der Erfindung ist vorgesehen, dass das Primärsystem und das Sekundärsystem dazu ausgebildet sind, wenigstens eine Teilfunktion der Fahrzeugfunktion im Zuge der Durchführung der Notfallfunktion auszuführen. Bei der Aktivierung eines der beiden Teilbremssysteme, wird also neben der vorgegebenen Bremsroutine eine Aufgabe der Fahrzeugfunktion weiter durchgeführt werden. Handelt es sich beispielsweise bei einer Teilfunktion der Fahrzeugfunktion um eine Funktion, die ein Bremsen des Kraftfahrzeugs steuert, kann diese Funktion auch von dem Primär- oder Sekundärsystem durchgeführt werden. Handelt es sich bei dem Primär- und/oder Sekundärsystem jedoch um Bremssysteme, die beispielsweise auch auf die Lenkung des Kraftfahrzeugs einwirken können oder die Geschwindigkeit des Kraftfahrzeugs beeinflussen können, kann es sich bei der Notfallfunktion auch um eine Notlauftrajektorie handeln. Die Fahrzeugfunktion kann hierfür kontinuierlich aktualisierte Trajektorien an das Primär- und Sekundärsystem senden, anhand derer das Kraftfahrzeug im Falle eines Fehlers der Fahrzeugfunktion, gelenkt und abgebremst werden könnte. Dadurch, dass das Primär- und Sekundärsystem Teilfunktionen der Fahrzeugfunktion übernehmen können, stellen diese eine Ergänzung der Fahrzeugfunktion dar, was im Notfall besonders vorteilhaft für das abgesicherte Anhalten des Kraftfahrzeugs sein kann.

Eine weitere vorteilhafte Ausführungsform des erfindungsgemäßen Bremssystems sieht vor, dass das Sekundärsystem dazu ausgelegt ist, bereits schon bei einem Fehler des Primärsystems die Notfallfunktion durchzuführen, auch wenn kein Fehler bei der Fahrzeugfunktion aufgetreten ist. Das Sekundärsystem ist also in der Lage, bei fehlerfreier Funktion der Fahrzeugfunktion, das heißt bei fehlerfreier Funktion einer aktivierten Fahrerassistenzfunktion, im Falle eines Defekts im Primärsystem anhand der ihm vorgegebenen Bremsroutine das Kraftfahrzeug anzuhalten und danach gegen Verrollen zu sichern. Wird das Kraftfahrzeug zum Beispiel in einem Parkhaus mittels eines ferngesteuerten Einparkhilfeassistenten langsam bewegt und es tritt unerwartet ein Ausfall des Primärsystems auf, erfolgt durch das Sekundärsystem der sofortige Notstopp des Fahrzeugs. Dies ermöglicht ein besonders abgesichertes Fahren des Kraftfahrzeugs insbesondere in Situationen, in denen eine Fahrzeugfunktion aus der Ferne, ohne dass sich der Fahrer im Kraftfahrzeug befindet, das Kraftfahrzeug steuert. Wird das Kraftfahrzeug hingegen beispielsweise auf einer mehrspurigen Schnellstraße mit einem Abstandsregeltempomaten bei Geschwindigkeiten oberhalb der vorgegebenen Geschwindigkeit autonom gesteuert, wird im Falle eines Defekts im Primärsystem die dem Sekundärsystem vorliegende, an die aktuelle Verkehrssituation angepasste Notfallfunktion vom Sekundärsystem durchgeführt und somit das Fahrzeug ebenfalls, jedoch zeitlich verzögert, abgebremst und im Stillstand gesichert.

Erfindungsgemäß ist vorgesehen, dass das Primärsystem dazu ausgelegt ist, bereits schon bei einem Fehler des Sekundärsystems die Notfallfunktion durchzuführen, auch wenn kein Fehler bei der Fahrzeugfunktion aufgetreten ist. Es ist somit vorgesehen, dass bei fehlerfreier Funktion der Fahrzeugfunktion das Hauptbremssystem bereits die ihm vorgegebene Bremsroutine aktiviert, wenn lediglich ein Defekt im Nebenbremssystem gemeldet wird. Handelt es sich beispielsweise bei der Fahrzeugfunktion um einen Einparkhilfeassistenten, der in einem Parkhaus ferngesteuert angewendet wird, wird das Kraftfahrzeug im Falle des Ausfalls des Sekundärsystems sofort mithilfe der Notstoppfunktion angehalten werden, auch wenn das Primärsystem und auch die Fahrzeugfunktion weiterhin fehlerfrei funktionieren. Hierdurch wird eine zusätzliche Absicherung beim Fahren mit einer Fahrzeugfunktion zum autonomen Steuern oder Fernbedienen des Kraftfahrzeugs ermöglicht, da es somit Voraussetzung für das Betreiben der entsprechenden Fahrzeugfunktion ist, dass zwei Systeme zum Abbremsen und Sichern des Kraftfahrzeugs im Stillstand verfügbar sind.

In weiterer vorteilhafter Ausgestaltung der Erfindung ist das Primärsystem dazu ausgelegt, alle zum Bremsen und/oder zum Sichern des Fahrzeugs im Stillstand ausgelegten Mittel anzusteuern. Es ist demnach vorgesehen, dass die Steuerung des Primärsystems auf alle Aktuatoren von Bremsen oder Haltemechanismen des Fahrzeugs zugreifen kann, sowohl auf deren Steuerung als auch auf deren Auslösemechaniken. Auch in einem fehlerfreien Zustand kann daher eine Funktionssoftware des Primärsystems, bei der es sich zum Beispiel um die Funktionssoftware einer Fahrdynamikregelung (ESC, für englisch "Electronic Stability Control") handelt, alle weiteren zum Bremsen oder Sichern des Kraftfahrzeugs vorgesehenen Fahrzeugkomponenten ansteuern. Bei diesen weiteren Komponenten kann es sich beispielsweise um eine elektrische Feststellbremse (EPB, für englisch "Electric Parking Brake"), einen elektrischen Bremskraftverstärker (eBKV) oder um eine Parksperre handeln. Im Einzelfehlfall, zum Beispiel bei Ausfall eines entsprechenden Kommunikations-Busses, kann das Primärsystem weiterhin auf einzelne, nicht defekte, zum Bremsen oder Sichern des Kraftfahrzeugs vorgesehenen Fahrzeugkomponenten der beiden Teilbremssysteme zugreifen. Wäre zum Beispiel der Haltemechanismus des Primärsystems defekt, könnte das Primärsystem mithilfe des Haltemechanismus des Sekundärsystems das Kraftfahrzeug im Stillstand sichern, nachdem dieses abgebremst wurde. Dies ermöglicht eine priorisierte Steuerung des Bremssystems durch die Steuerung des Primärsystems, wodurch eine besonders schnelle Reaktion des Bremssystems im Notfall ermöglicht wird.

Eine weitere vorteilhafte Ausführungsform der Erfindung sieht vor, dass das Sekundärsystem dazu ausgelegt ist, durch Betätigung eines elektrischen Bremskraftverstärkers das Fahrzeug abzubremsen. Wenn das Fahrzeug also durch das Sekundärsystem abgebremst wird, erfolgt dies mithilfe eines elektrischen Bremskraftverstärkers (eBKV). Neben einem elektrischen Bremskraftverstärker als Aktuator der Bremse wäre auch eine elektrische Feststellbremse (EPB, für englisch "Electric Parking Brake") oder eine andere Bremse denkbar.

In weiterer Ausgestaltung der Erfindung ist vorgesehen, dass das Sekundärsystem dazu ausgelegt ist, durch Betätigung einer Parksperre das Fahrzeug im Stillstand zu sichern. Es ist also vorgesehen, dass das Sekundärsystem zum Sichern des Kraftfahrzeugs im Stillstand eine Getriebesperre verwendet. Als Haltemechanismus wäre jedoch auch eine elektrische Feststellbremse (EPB, für englisch "Electric Parking Brake") oder eine andere Feststellbremse geeignet. Mit diesem Haltemechanismus kann erreicht werden, dass das Kraftfahrzeug, nachdem es abgebremst wurde, sicher im Stillstand gehalten wird und gegen mögliches Verrollen abgesichert wird.

In weiterer vorteilhafter Ausarbeitung des Bremssystems ist vorgesehen, dass das Primär- und/oder Sekundärsystem beim Auftreten von zumindest einem der folgenden Fehler der Fahrzeugfunktion dazu ausgelegt ist, die Notfallfunktion durchzuführen: Fehler in der Kommunikation mit der Fahrzeugfunktion, Überschreiten von einem von der Fahrzeugfunktion vorgegebenen Grenzwert der Fahrzeuggeschwindigkeit, Anforderung des Durchführens der Notfallfunktion durch die Fahrzeugfunktion. Das Primär- und/oder Sekundärsystem würde also dann ein Abbremsen des Kraftfahrzeugs gemäß seiner vorgegebenen Bremsroutine beginnen, wenn einer der folgenden Defekte in der Funktionsweise der aktivierten Fahrzeugfunktion beobachtet wird. Bei diesen Defekten kann es sich zum einen um Probleme beim Datenaustausch zwischen dem Primär- und/oder Sekundärsystem und der Fahrzeugfunktion handeln. Zum anderen kann die Notfallfunktion ausgelöst werden, wenn festgestellt wird, dass die aktuelle Fahrzeuggeschwindigkeit oberhalb einer von der Fahrzeugfunktion vorgegebene Maximalgeschwindigkeit liegt oder ein Aufruf der Notfallfunktion durch die Fahrzeugfunktion erfolgt.

Ein Fehler in der Kommunikation mit der Fahrzeugfunktion ergibt sich zum Beispiel, wenn ein entsprechender Kommunikations-Bus ausfällt oder andere Teile der Steuerung des Primär- und/oder Sekundärsystems oder der Fahrzeugfunktion ausfallen. Ein Abweichen von einem von der Fahrzeugfunktion vorgegebenen Grenzwert ergibt sich zum Beispiel, wenn es sich bei der Fahrzeugfunktion um einen Einparkassistenten handelt, der die Vorgabe hat nur in einem gewissen Geschwindigkeitsbereich, beispielsweise zwischen 0 km/h und 10 km/h, einen Einparkvorgang durchzuführen. Wird nun ein Überschreiten des Geschwindigkeitswerts festgestellt, zum Beispiel bedingt durch einen Fehler in der Geschwindigkeitsregelung, würde durch dieses Abweichen von der vorgegebenen Maximalgeschwindigkeit des Kraftfahrzeugs durch den Einparkassistenten ein Notstopp durch das Primär- oder Sekundärsystem veranlasst werden. In einem anderen Szenario wird von einer aktiven Fahrzeugfunktion angefordert, dass das Primär- und/oder Sekundärsystem die Notfallfunktion durchführen. Beispielsweise ist bei vielen remotegesteuerten Einparkassistenten vorgesehen, dass das Fahrzeug nur dann automatisch geführt wird, wenn ein Knopf auf einem Fahrzeugschlüssel oder in einer mit der Fahrzeugfunktion verknüpften Smartphone-App gedrückt wird. Sobald dieses Aktivierungselement nicht mehr gedrückt wird, wird das entsprechende Signal an das Primärsystem weitergeleitet und die Notfallfunktion des Primärsystems aktiviert, das heißt ein Notstopp des Kraftfahrzeugs durchgeführt. Da es bei jeglicher Art von technischem Defekt in der Fahrzeugfunktion zu einem Kommunikationsfehler mit dem Primär- und/oder Sekundärsystem und/oder zu einer Abweichung von einem vorgegebenen Grenzwert der Fahrzeugfunktion kommt, wird das Fahrzeug bei einem Ausfall der Fahrzeugfunktion zuverlässig mithilfe des Primär- und/oder Sekundärsystems entsprechend der bereitgestellten Notfallfunktion angehalten und im Stillstand gesichert.

In weiterer Ausgestaltung der Erfindung ist vorgesehen, dass das Primär- und Sekundärsystem beim Auftreten von zumindest einem der folgenden Fehler in den jeweiligen Systemen dazu ausgelegt sind, die Notfallfunktion durchzuführen: Fehler in der Kommunikation zwischen dem Primär- und Sekundärsystem, Defekt des Primärsystems, Defekt des Sekundärsystems. Das Primär- oder Sekundärsystem löst somit die ihm vorgegebene Bremsroutine zum Abbremsen des Kraftfahrzeugs und Sichern des Kraftfahrzeugs im Stillstand aus, wenn einer der folgenden Defekte in dem Primär- und Sekundärsystem festgestellt wird: Die Notfallfunktion wird aktiviert, wenn Probleme bei dem Datenaustausch zwischen dem Primär- und Sekundärsystem auftreten, eine Systemkomponente des Primärsystems ausfällt oder eine Systemkomponente des Sekundärsystems ausfällt. Kommunikationsprobleme zwischen dem Primär- und Sekundärsystem ergeben sich beispielsweise bei Ausfällen von Funktionen der jeweiligen Steuerungssoftware oder können durch technische Defekte in der Steuerung der beiden Teilbremssysteme oder durch Störungen an der Kommunikationsstrecke, wie zum Beispiel einem Kurzschluss auf dem Kommunikations-Bus, entstehen. Defekte im Primär- oder Sekundärsystem ergeben sich zum Beispiel durch technische Störungen und Fehler der entsprechenden Bremsen und Haltemechanismen. Wird somit der Ausfall eines der beiden Teilbremssysteme festgestellt, wird immer ein Abbremsen und Sichern des Kraftfahrzeugs mit dem jeweils anderen Teilbremssystem initiiert, sodass verhindert wird, dass das Kraftfahrzeug mit lediglich einem verfügbaren Bremssystem autonom oder ferngesteuert fährt. Dies dient einer zusätzlichen Absicherung bei einem autonomen und/oder ferngesteuerten Betrieb des Kraftfahrzeugs.

Das erfindungsgemäße Kraftfahrzeug umfasst das erfindungsgemäße Bremssystem oder eine vorteilhafte Ausführungsform des erfindungsgemäßen Bremssystems.

Bei dem erfindungsgemäßen Verfahren zum Betreiben des erfindungsgemäßen Bremssystems oder einer vorteilhaften Ausführungsform des erfindungsgemäßen Bremssystems führt das Primärsystem beim Auftreten eines Fehlers in einer zum autonomen Steuern und Fernbedienen des Kraftfahrzeugs ausgelegten Fahrzeugfunktion die Notfallfunktion durch, wobei das Sekundärsystem in dem Fall stattdessen die Notfallfunktion durchführt, wenn beim Primärsystem ein Fehler auftritt. Das Bremssystem wird also in der Art betrieben, dass im Falle einer Fehlfunktion einer Fahrzeugfunktion, wie einer Fahrzeugassistenzfunktion, die ein eigenständiges und mit einer Fernbedienung gesteuertes Fahren des Kraftfahrzeugs ermöglicht, das Primärsystem gemäß der ihm vorgegebenen Bremsroutine das Kraftfahrzeug abbremst und im Stillstand hält, wobei das Sekundärsystem in diesem Falle die ihm vorgegebenen Bremsroutine aktiviert und somit das Abbremsen des Kraftfahrzeugs und anschließende Sichern im Stillstand übernimmt, falls das Primärsystem defekt sein sollte.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Bremssystems beschrieben worden sind. Aus diesem Grund sind die entsprechenden Weiterbildungen des erfindungsgemäßen Verfahrens hier nicht noch einmal beschrieben.

Im Folgenden sind zwei Ausführungsbeispiele der Erfindung beschrieben. Hierzu zeigt:
- Fig. 1: eine schematische Darstellung eines Bremssystems eines Kraftfahrzeugs bei einer Geschwindigkeit des Kraftfahrzeugs unterhalb einer vorgegebenen Geschwindigkeit;
- Fig. 2: eine schematische Darstellung von Systemzuständen eines Primärsystems des Bremssystems;
- Fig. 3: eine schematische Darstellung der Systemzustände eines Sekundärsystems des Bremssystems;
- Fig. 4: eine schematische Darstellung des Bremssystems bei einer Geschwindigkeit des Kraftfahrzeugs größer oder gleich der vorgegebenen Geschwindigkeit.

Bei den beiden im Folgenden erläuterten Ausführungsbeispielen handelt es sich um zwei bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

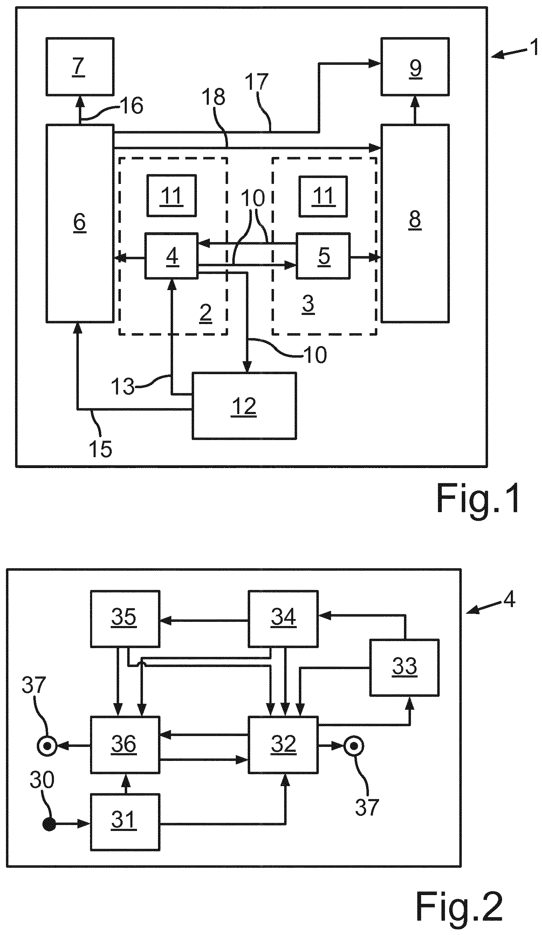

In Fig. 1 ist ein Bremssystem 1 für ein Kraftfahrzeug skizziert. Das Bremssystem 1 weist ein Primärsystem 2 und ein Sekundärsystem 3 auf. Eine Steuerung 4 des Primärsystems 2, bei der es sich zum Beispiel um eine Fahrdynamikregelung handelt, steuert eine Bremsaktuatorik 6 der Fahrdynamikregelung an sowie einen Haltemechanismus, bei dem es sich um eine elektrische Feststellbremse 7 handeln kann. Analog dazu kann eine Steuerung 5 des Sekundärsystems 3 eine weitere Bremsaktuatorik ansteuern, bei der es sich beispielsweise um einen elektrischen Bremskraftverstärker 8 handelt. Als ein von der Steuerung 5 des Sekundärsystems 3 angesteuerten Haltemechanismus kann beispielsweise eine Parksperre 9 vorgesehen sein. Die Steuerungen 4 und 5 des Primär- und Sekundärsystems 2 und 3, die auch als deren Zustandsautomaten bezeichnet werden können, tauschen gegenseitig Zustandsmeldungen aus. Dieser Datenaustausch wird anhand von zwei Pfeile 10 dargestellt.

Inwiefern die Steuerungen 4 und 5 des Primär- und Sekundärsystems 2 und 3 fehlerfrei funktionieren, wird zusätzlich durch jeweilige Überwachungseinheiten 11 überwacht. Falls diese Überwachungseinheiten einen Fehler feststellen, zum Beispiel durch einen defekten Mikrocontroller, wird dieser Fehler an eine Steuerungssoftware des jeweiligen Teilsystems weitergeleitet und kann zum Auslösen einer Notfallfunktion führen. Gemäß den Vorgaben der Notfallfunktion wird das Kraftfahrzeug bis in einen Stillstand abgebremst und anschließend im Stillstand gesichert.

Die Steuerung 4 des Primärsystems 2 steht zudem im Datenaustausch mit einer Fahrzeugfunktion 12, die als Kundenfunktion eine von einem Benutzer des Kraftfahrzeugs gestellte Aufgabe erfüllt, wie zum Beispiel ein fernbedientes Einparken des Kraftfahrzeugs in einem Parkhaus. Wird von der Fahrzeugfunktion 12 ein Notstopp des Kraftfahrzeugs gewünscht, wird ein entsprechendes Datensignal 13 von der Fahrzeugfunktion 12 an die Steuerung 4 des Primärsystems 2 gesendet. Zudem übermittelt die Steuerung 4 des Primärsystems 2 seine Zustandsdaten 10 an die Fahrzeugfunktion 12. Darüber hinaus übermittelt die Fahrzeugfunktion 12 an die Fahrdynamikregelung 6 eine Normalfunktion 15 der Fahrzeugfunktion 12. Bei dieser Normalfunktion 15 kann es sich zum Beispiel um eine Sollgeschwindigkeit oder eine Maximal- oder Minimalgeschwindigkeit des Fahrzeugs handeln.

Es ist zudem vorgesehen, dass das Primärsystem 2 mithilfe seiner Steuerung 4 über die Bremsaktuatorik 6 der Fahrdynamikregelung nicht nur die elektrische Feststellbremse 7 ansteuern kann, sondern auch den elektrischen Bremskraftverstärker 8 und die Parksperre 9. Hierfür können entsprechende Ansteuerungssignale 16, 17 und 18 über die Bremsaktuatorik 6 der Fahrdynamikregelung an die entsprechenden Haltemechanismen, den elektrischen Bremskraftverstärker 8 und die Parksperre 9, sowie an die elektrische Feststellbremse 7 gesendet werden.

Mit dem in Fig. 1 skizzierten Bremssystem 1 wird bei einer Geschwindigkeit des Kraftfahrzeugs unterhalb einer vorgegebenen Geschwindigkeit, die typischerweise bei 15 km/h liegt, gemäß der Notfallfunktion eine Vollbremsung des Kraftfahrzeugs und ein anschließendes Sichern des Kraftfahrzeug im Stillstand durchgeführt, gesteuert von den Steuerungen 4 oder 5 des Primär- oder Sekundärsystems 2 und 3 oder von der Fahrzeugfunktion 12. Es wird also in Fig. 1 ein Notstopp-Bremssystem skizziert.

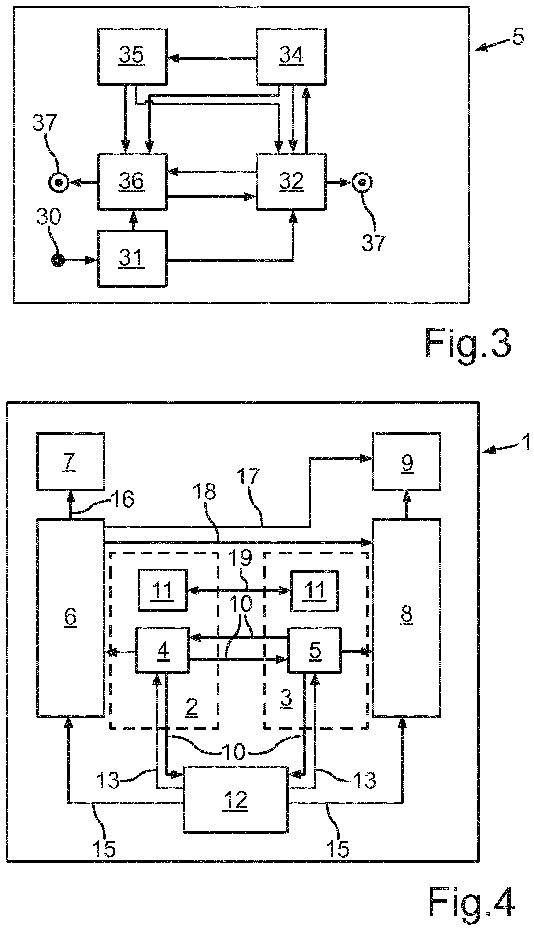

In Fig. 2 sind die einzelnen Zustände der Steuerung 4 des Primärsystems 2 dargestellt, bezogen auf ein Betreiben des Bremssystems 1 als Notstopp-Bremssystem, das heißt bei Geschwindigkeiten des Kraftfahrzeugs unterhalb der vorgegebenen Geschwindigkeit. Die Steuerung 4 des Primärsystems 2 kann hierbei sechs verschiedene Zustände einnehmen, zwischen denen gemäß der eingezeichneten Pfeile Zustandsmeldungen, Daten oder Signale übermittelt werden. Nach einem Funktionsstart 30 des Kraftfahrzeugs wird die Steuerung 4 des Primärsystems 2 initialisiert und geht in den Zustand "Initialisierung" 31. Sind alle Systemkomponenten des Primärsystems 2 fehlerfrei verfügbar und meldet die Steuerung 5 des Sekundärsystems 3 an die Steuerung 4 des Primärsystems 2, dass es im Zustand "Verfügbar" 32 ist (vergleiche Fig. 3 für Zustände der Steuerung 5 des Sekundärsystems 3), wechselt die Steuerung 4 des Primärsystems 2 vom Zustand "Initialisierung" 31 zum Zustand "Verfügbar" 32.

Wird nun eine Fahrzeugfunktion 12 aktiviert, die eine Überwachung ihrer Funktion durch das Bremssystem 1 anfordert, wechselt die Steuerung 4 des Primärsystems 2 vom Zustand "Verfügbar" 32 zum Zustand "Sekundärsystem anfordern" 33 falls die Zustandsmeldung der Steuerung 5 des Sekundärsystems 3 weiterhin den Zustand "Verfügbar" 32 an die Steuerung 4 des Primärsystems 2 sendet und die aktuelle Geschwindigkeit des Kraftfahrzeugs unterhalb einer von der Fahrzeugfunktion 12 vorgegebenen Soll-Geschwindigkeit liegt. Anschließend wechselt die Steuerung 4 des Primärsystems 2 seinen Zustand von "Sekundärsystem anfordern" 33 zum Zustand "Passive Überwachung" 34, sobald von der Steuerung 5 des Sekundärsystems 3 gemeldet wird, dass dieses sich im Zustand "Passive Überwachung" 34 befindet. Der Zustand "Passive Überwachung" 34 entspricht dem Normalzustand der Steuerung 4 des Primärsystems 2.

Bei einer fehlerfreien Funktion der Fahrzeugfunktion 12 würde das System vom Zustand "Passive Überwachung" 34 zum Zustand "Verfügbar" 32 wechseln, sobald die Fahrzeugfunktion 12 beendet wurde. Zum Beispiel falls es sich bei der Fahrzeugfunktion 12 um einen Einparkassistenten handelt, würde der Systemzustand der Steuerung 4 des Primärsystems 2 zurück zu "Verfügbar" 32 wechseln, sobald der Einparkvorgang abgeschlossen ist.

Der Zustand der Steuerung 4 des Primärsystems 2 wechselt vom Zustand "Passive Überwachung" 34 zum Zustand "Aktiv ausgelöst" 35, wenn Signale übermittelt werden, die auf einen Fehler im Sekundärsystem 3 hinweisen, beispielsweise darauf, dass die Steuerung 5 des Sekundärsystems 3 den Zustand "Passive Überwachung" 34 verlässt oder falls ein Kommunikationsfehler beim Datenaustausch mit der Steuerung 5 des Sekundärsystems 3 auftritt, Kommunikationsprobleme zwischen der Steuerung 4 des Primärsystems 2 und der Fahrzeugfunktion 12 auftreten, ein Überschreiten des von der Fahrzeugfunktion 12 übermittelten Soll-Geschwindigkeitswertes festgestellt wird oder die Fahrzeugfunktion 12 einen Notstopp durch die Steuerung 4 des Primärsystems 2 anfordert.

Im Zustand "Aktiv ausgelöst" 35 wird das Fahrzeug bis zum Stillstand verzögert und im Stillstand gesichert. Sobald sich das Fahrzeug im Stillstand befindet, kann die Steuerung 4 des Primärsystems 2, sofern kein technischer Defekt vorliegt, wieder zurück in den Zustand "Verfügbar" 32 wechseln. Befindet sich das Fahrzeug jedoch im Stillstand und es wurde zusätzlich festgestellt, dass entweder die Steuerung 5 des Sekundärsystems 3 einen Zustand "Systemkomponente defekt" 36 meldet, ein Kommunikationsfehler mit der Steuerung 5 des Sekundärsystems 3 vorliegt oder festgestellt wurde, dass zumindest eine Komponente des Primärsystems 2 und/oder die Bremsaktuatorik 6 der Fahrdynamikregelung und/oder die elektrische Feststellbremse 7 defekt sind, wechselt die Steuerung 4 des Primärsystems 2 ihren Zustand von "Aktiv ausgelöst" 35 zu "Systemkomponente defekt" 36. Bei einem der genannten Defekt beziehungsweise Fehler kann zudem die Steuerung 4 des Primärsystems 2 sofort vom Zustand "Passive Überwachung" 34 in den Zustand "Systemkomponente defekt" 36 wechseln.

Sobald alle Komponenten des Primärsystems 2 sowie die Bremsaktuatorik 6 der Fahrdynamikregelung und die elektrische Feststellbremse 7 wieder funktionsfähig sind und die Steuerung 5 des Sekundärsystems 3 den Zustand "Verfügbar" 32 meldet, wechselt die Steuerung 4 des Primärsystems 2 vom Zustand "Systemkomponente defekt" 36 zurück in den Zustand "Verfügbar" 32. Erkennt die Steuerung 4 des Primärsystems 2 bereits im Zustand "Verfügbar" 32, dass die Steuerung 5 des Sekundärsystems 3 im Zustand "Systemkomponente defekt" ist oder ein Kommunikationsfehler mit der Steuerung 5 des Sekundärsystems 3 aufgetreten ist, wechselt das System direkt vom Zustand "Verfügbar" 32 in den Zustand "Systemkomponente defekt" 36. Sowohl im Zustand "Verfügbar" 32 als auch im Zustand "Systemkomponente defekt" 36 ist es möglich, die Steuerung 4 des Primärsystems 2 zu beenden. Ein solches Funktionsende 37 erfolgt zum Beispiel durch das Ausschalten des Kraftfahrzeugs.

Es ist außerdem vorgesehen, dass die Steuerung 4 des Primärsystems 2 vom Zustand "Sekundärsystem anfordern" 33 entweder direkt durch ein Beenden der Fahrzeugfunktion 12 oder nach einer vorgeschriebene maximale Zeitdauer im Falle einer ausbleibenden Rückmeldung von der Steuerung 5 des Sekundärsystems 3, zum Beispiel falls ein entsprechender Fehler in der Kommunikation zwischen den Steuerungen 4 und 5 des Primär- und Sekundärsystems 2 und 3 auftritt, zurück in den Systemzustand "Verfügbar" 32 wechselt.

In Fig. 3 sind die fünf verschiedenen Zustände der Steuerung 5 des Sekundärsystems 3 dargestellt. Zwischen diesen Zuständen werden entsprechend der eingezeichneten Pfeile Zustandsmeldungen, Daten und Signale übermittelt. Die Steuerung 5 des Sekundärsystems 3 wechselt vom Zustand "Initialisierung" 31 zum Zustand "Verfügbar" 32, sobald gemeldet wird, dass alle Komponenten des Sekundärsystems 3 sowie der elektrische Bremskraftverstärker 8 und die Parksperre 9 fehlerfrei funktionieren. Sobald die Steuerung 5 des Sekundärsystems 3 im Zustand "Verfügbar" 32 ist und von der Steuerung 4 des Primärsystems 2 angefordert wird, wechselt die Steuerung 5 des Sekundärsystems 3 vom Zustand "Verfügbar" 32 zum Zustand "Passive Überwachung" 34.

Die Steuerung 5 des Sekundärsystems 3 wechselt vom Zustand "Passive Überwachung" 34 zurück zum Zustand "Verfügbar" 32, wenn die Steuerung 4 des Primärsystems 2 in den Zustand "Verfügbar" 32 wechselt. Wird jedoch von der Steuerung 4 des Primärsystems 2 gemeldet, dass diese im Zustand "Systemkomponente defekt" 36 ist oder ein Kommunikationsfehler mit der Steuerung 4 des Primärsystems 2 festgestellt wird, wechselt die Steuerung 5 des Sekundärsystems 3 vom Zustand "Passive Überwachung" 34 zum Zustand "Aktiv ausgelöst" 35.

Im Zustand "Aktiv ausgelöst" wird das Fahrzeug bis in den Stillstand abgebremst und im Stillstand gesichert. Die Steuerung 5 des Sekundärsystems 3 kann vom Zustand "Aktiv ausgelöst" 35 zurück in den Zustand "Verfügbar" 32 wechseln, sobald sich das Kraftfahrzeug im Stillstand befindet. Falls das Sekundärsystem 3 selbst über keine Sensoren verfügt, anhand derer festgestellt werden kann, ob sich das Kraftfahrzeug im Stillstand befindet, kann eine maximale Verzögerungsdauer, das heißt eine maximale Bremsdauer, festgesetzt werden nach der die Steuerung 5 des Sekundärsystems 3 vom Zustand "Aktiv ausgelöst" 35 zurück zum Zustand "Verfügbar" 32 wechselt.

Bei einem Defekt einer Komponenten des Sekundärsystems 3 und/oder des elektrischen Bremskraftverstärkers 8 und/oder der Parksperre 9 kann die Steuerung 5 des Sekundärsystems 3 entweder vom Zustand "Passive Überwachung" direkt in den Zustand "Systemkomponente defekt" 36 wechseln oder vom Zustand "Aktiv ausgelöst" 35 in den Zustand "Systemkomponente defekt" 36 wechseln. Sobald alle Komponenten des Sekundärsystems 3 sowie der elektrische Bremskraftverstärker 8 und die Parksperre 9 wieder fehlerfrei funktionieren, das heißt verfügbar sind, wechselt der Systemzustand wieder von "Systemkomponente defekt" 36 zu "Verfügbar" 32. Wird bereits im Zustand "Verfügbar" 32 von der Steuerung 5 festgestellt, dass eine Komponente des Sekundärsystems 3 und/oder der elektrische Bremskraftverstärker 8 und/oder die Parksperre 9 defekt sind, wechselt die Steuerung 5 des Sekundärsystems 3 direkt vom Zustand "Verfügbar" 32 zum Zustand "Systemkomponente defekt" 36.

Analog zur Steuerung 4 des Primärsystems 2 ist auch in der Steuerung 5 des Sekundärsystems 3 vorgesehen, dass ein Funktionsstart 30 die Funktion aktiviert, zum Beispiel durch ein Starten des Motors, und dass diese beendet werden kann durch einen Wechsel vom Systemzustand "Verfügbar" 32 oder "Systemkomponente defekt" 36 zum Funktionsende 37.

In Fig. 4 ist erneut das Bremssystem 1 skizziert, jedoch sind im Vergleich zu Fig. 1 zusätzlich alle Daten- und Signalwege eingezeichnet, die bei einer Geschwindigkeit des Kraftfahrzeugs größer oder gleich der vorgegebenen Geschwindigkeit aktiviert werden. Bei Geschwindigkeiten ab typischerweise 15 km/h ist gemäß der von der Fahrzeugfunktion 12 übermittelten Notfallfunktion ein Abbremsen des Kraftfahrzeugs unter Berücksichtigung einer aktuellen Verkehrssituation in den Stillstand sowie das anschließende Sichern des Kraftfahrzeug im Stillstand vorgesehen. Es wird also in Fig. 4 ein Notlauf-Bremssystem skizziert.

Dieses Notlauf-Bremssystem unterscheidet sich von dem in Fig. 1 skizzierten Notstopp-Bremssystem dadurch, dass die Fahrzeugfunktion 12 nicht nur Zustandsmeldungen, Daten und Signale mit der Steuerung 4 des Primärsystems 2 austauscht, sondern auch mit der Steuerung 5 des Sekundärsystems 3. Gemäß dem Notlauf-Bremssystem bestimmt die Fahrzeugfunktion 12 die Notfallfunktionen für das Primär- und Sekundärsystem 2 und 3, gemäß denen das Fahrzeug abhängig von der aktuellen Verkehrssituation abgebremst wird und danach im Stillstand gesichert wird. Diese Notfallfunktionen werden sowohl der Steuerung 4 des Primärsystems 2 als auch der Steuerung 5 des Sekundärsystems 3 übermittelt, was mit Hilfe der Pfeile 13 dargestellt ist. Die Fahrzeugfunktion 12 empfängt sowohl die Zustandsmeldung der Steuerung 4 des Primärsystems 2 (vergleiche den entsprechenden Pfeil 10) als auch die Zustandsmeldung der Steuerung 5 des Sekundärsystems 3 (vergleiche den entsprechenden Pfeil 10). Die von der Fahrzeugfunktion 12 vorgegebene Normalfunktion 15, bei der es sich zum Beispiel um eine Soll-Geschwindigkeit oder eine Maximal- oder Minimalgeschwindigkeit des Fahrzeugs handeln kann, wird gemäß dem Notlauf-Bremssystem sowohl an die Bremsaktuatorik 6 der Fahrdynamikregelung (siehe den entsprechenden Pfeil 15), als auch an den elektrischen Bremskraftverstärker 8, der von der Steuerung 5 des Sekundärsystems 3 angesteuert wird, übermittelt (siehe den entsprechenden Pfeil 15).

Falls ein Fehler der Fahrzeugfunktion 12 auftritt, wird die Steuerung 4 des Primärsystems 2 basierend auf der ihr zuletzt von der Fahrzeugfunktion 12 übermittelten Notfallfunktion das Abbremsen des Kraftfahrzeugs mithilfe der Bremsaktuatorik 6 der Fahrdynamikregelung veranlassen. Falls zusätzlich zu einem Fehler in der Fahrzeugfunktion 12 auch noch ein Defekt im Primärsystem 2 auftritt, zum Beispiel in dessen Steuerung 4 und/oder der Bremsaktuatorik 6 der Fahrdynamikregelung und/oder der elektrischen Feststellbremse 7, kann das Kraftfahrzeug basierend auf der der Steuerung 5 des Sekundärsystems 3 übermittelten Notfallfunktion durch den elektrischen Bremskraftverstärker 8, gesteuert von der Steuerung 5 des Sekundärsystems 3 abgebremst werden.

Gemäß dem Notlauf-Bremssystem ist zudem vorgesehen, dass die Überwachungseinheiten 11 des Primär- und Sekundärsystems 2 und 3 über eine Kommunikations-Verbindung jeweils ihren Systemstatus 19 austauschen. Da die Fahrzeugfunktion 12 sowohl mit der Steuerung 4 des Primärsystems 2 als auch mit der Steuerung 5 des Sekundärsystems 3 in Kontakt steht, kann bei einem Fehler in einem der beiden Teilbremssysteme die Fahrzeugfunktion 12 weiterhin mit dem fehlerfreien Teilbremssystem Daten austauschen, beispielsweise der Steuerung 4 oder 5 des jeweiligen Teilbremssystems 2 und 3 weiterhin kontinuierlich aktualisierte Notfallfunktionen übermitteln.

Das Abbremsen und anschließende Sichern des Kraftfahrzeugs im Stillstand wurde exemplarisch anhand einer von einer Fahrdynamikregelung gesteuerten Bremsaktuatorik 6, einem elektrischen Bremskraftverstärkers 8, einer elektrischen Feststellbremse 7 und einer Parksperre 9 beschrieben, wobei es sich hierbei um eine von zahlreichen Ausführungsmöglichkeiten handelt.

### Bezugszeichenliste

- 1: Bremssystem
- 2: Primärsystem
- 3: Sekundärsystem
- 4: Steuerung
- 5: Steuerung
- 6: Bremsaktuatorik
- 7: elektrische Feststellbremse
- 8: elektrischer Bremskraftverstärker
- 9: Parksperre
- 10: Zustandsmeldung
- 11: Überwachungseinheit
- 12: Fahrzeugfunktion
- 13: Zustandsmeldung
- 15: Normalfunktion
- 16: Ansteuerungssignal
- 17: Ansteuerungssignal
- 18: Ansteuerungssignal
- 19: Systemstatus
- 30: Funktionsstart
- 31: Zustand "Initialisierung"
- 32: Zustand "Verfügbar"
- 33: Zustand "Sekundärsystem anfordern"
- 34: Zustand "Passive Überwachung"
- 35: Zustand "Aktiv ausgelöst"
- 36: Zustand "Systemkomponente defekt"
- 37: Funktionsende

## Patentansprüche

1. Bremssystem (1) für ein Kraftfahrzeug, umfassend:
- ein Primärsystem (2) und ein Sekundärsystem (3), welche jeweils dazu ausgelegt sind, das Kraftfahrzeug automatisch gemäß einer Notfallfunktion in den Stillstand abzubremsen und danach im Stillstand zu sichern;
gekennzeichnet, dass
- zumindest das Primärsystem (2) dazu ausgelegt ist, beim Auftreten eines Fehlers in einer zum autonomen Steuern oder Fernbedienen des Kraftfahrzeugs ausgelegten Fahrzeugfunktion (12) die Notfallfunktion durchzuführen, wobei das Sekundärsystem (3) in dem Fall dazu ausgerichtet ist, beim Auftreten eines Fehlers im Primärsystem (2) die Notfallfunktion durchzuführen, und
- das Primärsystems (2) dazu ausgelegt ist, bereits schon bei einem Fehler des Sekundärsystem (3) die Notfallfunktion durchzuführen auch wenn kein Fehler bei der Fahrzeugfunktion (12) aufgetreten ist.

2. Bremssystem (1) nach Anspruch 1,
**dadurch gekennzeichnet, dass**
die Notfallunktion bei einer Geschwindigkeit des Kraftfahrzeugs unterhalb von einer vorgegebenen Geschwindigkeit vorsieht, eine Vollbremsung vorzunehmen und das Kraftfahrzeug danach im Stillstand zu sichern.

3. Bremssystem (1) nach Anspruch 2,
**dadurch gekennzeichnet, dass**
die Notfallunktion bei einer Geschwindigkeit des Kraftfahrzeugs größer oder gleich der vorgegebenen Geschwindigkeit vorsieht, das Kraftfahrzeug unter Berücksichtigung einer aktuellen Verkehrssituation in den Stillstand abzubremsen und danach im Stillstand zu sichern.

4. Bremssystem (1) nach Anspruch 3,
**dadurch gekennzeichnet, dass**
das Primärsystem (2) und das Sekundärsystem (3) dazu ausgelegt sind, wenigstens eine Teilfunktion der Fahrzeugfunktion (12) im Zuge der Durchführung der Notfallfunktion auszuführen.

5. Bremssystem (1) nach einem der vorhergehenden Ansprüche,
**dadurch gekennzeichnet, dass**
das Sekundärsystem (3) dazu ausgelegt ist, bereits schon bei einem Fehler des Primärsystems (2) die Notfallfunktion durchzuführen auch wenn kein Fehler bei der Fahrzeugfunktion (12) aufgetreten ist.

6. Bremssystem (1) nach einem der vorhergehenden Ansprüche,
**dadurch gekennzeichnet, dass**
das Primärsystem (2) dazu ausgelegt ist, alle zum Bremsen und/oder zum Sichern des Fahrzeugs im Stillstand ausgelegten Mittel anzusteuern.

7. Bremssystem (1) nach einem der vorhergehenden Ansprüche,
**dadurch gekennzeichnet, dass**
das Sekundärsystem (3) dazu ausgelegt ist, durch Betätigung eines elektronischen Bremskraftverstärkers (8) das Fahrzeug abzubremsen.

8. Bremssystem (1) nach einem der vorhergehenden Ansprüche,
**dadurch gekennzeichnet, dass**
das Sekundärsystem (3) dazu ausgelegt ist, durch Betätigung einer Parksperre (9) das Fahrzeug im Stillstand zu sichern.

9. Bremssystem (1) nach einem der vorhergehenden Ansprüche,
**dadurch gekennzeichnet, dass**
das Primär- und/oder Sekundärsystem (2, 3) beim Auftreten von zumindest einem der folgenden Fehler der Fahrzeugfunktion (12) dazu ausgelegt ist, die Notfallfunktion durchzuführen:
- Fehler in der Kommunikation mit der Fahrzeugfunktion (12)
- Überschreiten von einem von der Fahrzeugfunktion (12) vorgegebenen Grenzwert der Fahrzeuggeschwindigkeit
- Anforderung des Durchführens der Notfallfunktion durch die Fahrzeugfunktion (12).

10. Bremssystem (1) nach einem der vorhergehenden Ansprüche,
**dadurch gekennzeichnet, dass**
das Primär- und Sekundärsystem (2, 3) beim Auftreten von zumindest einem der folgenden Fehler in den jeweiligen Systemen dazu ausgelegt sind, die Notfallfunktion durchzuführen:
- Fehler in der Kommunikation zwischen dem Primär- und Sekundärsystem (2, 3)
- Defekt des Primärsystems (2)
- Defekt des Sekundärsystems (3).

11. Kraftfahrzeug mit einem Bremssystem (1) nach einem der vorhergehenden Ansprüche.

12. Verfahren zum Betreiben eines Bremssystems (1) nach einem der Ansprüche 1 bis 10, bei welchem das Primärsystem (2) beim Auftreten eines Fehlers in einer zum autonomen Steuern oder Fernbedienen des Kraftfahrzeugs ausgelegten Fahrzeugfunktion (12) die Notfallfunktion durchführt, wobei das Sekundärsystem (3) in dem Fall stattdessen die Notfallfunktion durchführt, wenn beim Primärsystem (2) ein Fehler auftritt, wobei das Primärsystems (2) bereits schon bei einem Fehler des Sekundärsystem (3) die Notfallfunktion durchführt, auch wenn kein Fehler bei der Fahrzeugfunktion (12) aufgetreten ist.

## Claims

1. Brake system (1) for a motor vehicle, comprising:
- a primary system (2) and a secondary system (3), each of which is designed to automatically brake the motor vehicle to standstill in accordance with an emergency function and then secure it at standstill;
- **characterized in that** at least the primary system (2) is designed to execute the emergency function when a fault occurs in a vehicle function (12) designed for autonomous control or for remote control of the motor vehicle, wherein in this case the secondary system (3) is designed to execute the emergency function when a fault occurs in the primary system (2); and
- in the event of a fault in the secondary system (3), the primary system (2) is designed to execute the emergency function already, even if no fault has occurred in the vehicle function (12).

2. Brake system (1) according to claim 1,
**characterized in that**
at a speed of the motor vehicle below a prespecified speed, the emergency function provides for carrying out full braking and then securing the motor vehicle at a standstill.

3. Brake system (1) according to claim 2,
**characterized in that**
at a speed of the motor vehicle greater than or equal to the prespecified speed, the emergency stop provides for braking the motor vehicle to a standstill, while taking into account a current traffic situation, and then securing the motor vehicle at standstill.

4. Brake system (1) according to claim 3,
**characterized in that**
the primary system (2) and the secondary system (3) are designed to execute at least a sub-function of the vehicle function (12) in the course of executing the emergency function.

5. Brake system (1) according to any one of the preceding claims,
**characterized in that**
in the event of a fault in the primary system (2), the secondary system (3) is designed to execute the emergency function already, even if no fault has occurred in the vehicle function (12).

6. Brake system (1) according to any one of the preceding claims,
**characterized in that**
the primary system (2) is designed to control all means designed to brake and/or secure the vehicle at a standstill.

7. Brake system (1) according to any one of the preceding claims,
**characterized in that**
the secondary system (3) is designed to brake the vehicle by actuating an electronic brake booster (8).

8. Brake system (1) according to any one of the preceding claims,
**characterized in that**
the secondary system (3) is designed to secure the vehicle when it is at a standstill by actuating a parking lock (9).

9. Brake system (1) according to any one of the preceding claims,
**characterized in that**
in the event of at least one of the following faults in the vehicle function (12) occurring, the primary and/or secondary system (2, 3) is designed to execute the emergency function:
- errors in communication with the vehicle function (12)
- exceeding a limit value of the vehicle speed prespecified by the vehicle function (12)
- the vehicle function (12) requesting that the emergency function be executed.

10. Brake system (1) according to any one of the preceding claims,
**characterized in that**
in the event of at least one of the following faults occurring in the respective systems, the primary and secondary systems (2, 3) are designed to execute the emergency function:
- errors in communication between the primary and secondary systems (2, 3)
- defect in the primary system (2)
- defect in the secondary system (3).

11. Motor vehicle with a brake system (1) according to any one of the preceding claims.

12. Method for operating a brake system (1) according to any one of claims 1 to 10, with which the primary system (2) executes the emergency function in the event of a fault occurring in a vehicle function (12) that is designed to autonomously control or remotely control the motor vehicle, wherein in this case the secondary system (3) instead executes the emergency function when a fault occurs in the primary system (2), wherein in the event of a fault in the secondary system (3), the primary system (2) executes the emergency function already, even if no fault has occurred in the vehicle function (12).

## Revendications

1. Système de frein (1) pour un véhicule automobile, comprenant:
- un système primaire (2) et un système secondaire (3), qui sont chacun conçus pour ralentir automatiquement le véhicule automobile jusqu'à l'arrêt, conformément à une fonction d'urgence, puis l'immobiliser;
- **caractérisé en ce qu'au** moins le système primaire (2) est conçu pour exécuter la function d'urgence lorsqu'une erreur survient dans une fonction de véhicule (12) conçue pour commander de manière autonome ou pour télécommander le véhicule automobile, dans lequel le système secondaire (3) est conçu pour exécuter la fonction d'urgence dans le cas où une erreur survient dans le système primaire (2), et
- le système primaire (2) est conçu pour exécuter la fonction d'urgence déjà lorsqu'une erreur servient dans le système secondaire (3) même lorsqu'aucune erreur n'est survenue dans la fonction de véhicule (12).

2. Système de frein (1) selon la revendication 1,
**caractérisé en ce que**
la fonction d'urgence prévoit, lorsqu'une vitesse du véhicule automobile se trouve en dessous d'une vitesse prédéfinie, d'effectuer un freinage complet, puis d'immobiliser le véhicule automobile.

3. Système de frein (1) selon la revendication 2,
**caractérisé en ce que**
la fonction d'urgence prévoit, lorsqu'une vitesse du véhicule automobile est supérieure ou égale à la vitesse prédéfinie, de freiner le véhicule automobile jusqu'à l'arrêt en tenant compte d'une circulation actuelle de circulation, puis de l'immobiliser.

4. Système de frein (1) selon la revendication 3,
**caractérisé en ce que**
le système primaire (2) et le système secondaire (3) sont conçus pour exécuter au moins une function partielle de la fonction de véhicule (12) dans le cadre de l'exécution de la fonction d'urgence.

5. Système de frein (1) selon l'une quelconque des revendications précédentes, **caractérisé en ce que**
le système secondaire (3) est conçu pour executer la fonction d'urgence déjà lorsqu'une erreur servient dans le système primaire (2) même lorsqu'aucune erreur n'est survenue dans la fonction de véhicule (12).

6. Système de frein (1) selon l'une quelconque des revendications précédentes, **caractérisé en ce que**
le système primaire (2) est conçu pour commander tous les moyens conçus pour le freinage et/ou l'immobilisation du véhicule.

7. Système de frein (1) selon l'une quelconque des revendications précédentes, **caractérisé en ce que**
le système secondaire (3) est conçu pour freiner le véhicule par l'actionnement d'un servofrein électronique (8).

8. Système de frein (1) selon l'une quelconque des revendications précédentes, **caractérisé en ce que**
le système secondaire (3) est conçu pour immobiliser le véhicule par l'actionnement d'un verrouillage de stationnement (9).

9. Système de frein (1) selon l'une quelconque des revendications précédentes, **caractérisé en ce que**
les systèmes primaire et/ou secondaire (2, 3) sont conçus pour exécuter la fonction d'urgence lorsqu'au moins l'une des erreurs suivantes servient dans la fonction de véhicule (12):
- erreur de communication avec la fonction de véhicule (12)
- dépassement d'une valeur limite de vitesse de véhicule prédéfinie par la fonction de véhicule (12)
- demande d'exécution de la fonction d'urgence par la fonction de véhicule (12).

10. Système de frein (1) selon l'une quelconque des revendications précédentes, **caractérisé en ce que**
les systèmes primaire et/ou secondaire (2, 3) sont
conçus pour exécuter la fonction d'urgence lorsqu'au moins l'une des erreurs suivantes servient dans les systèmes respectifs:
- erreur de communication entre les systems primaire et secondaire (2, 3)
- défaillance du système primaire (2)
- défaillance du système secondaire (3).

11. Véhicule automobile doté d'un système de frein (1) selon l'une quelconque des revendications précédentes.

12. Procédé pour faire fonctionner un système de frein (1) selon l'une quelconque des revendications 1 à 10, dans lequel le système primaire (2) exécute la fonction d'urgence lorsqu'une erreur survient dans une fonction de véhicule (12) conçue pour commander de manière autonome ou télécommander le véhicule automobile, dans lequel le système secondaire (3) exécute la fonction d'urgence à la place lorsqu'une erreur survient dans le système primaire (2), dans lequel le système primaire (2) exécute la fonction d'urgence déjà lorsqu'une erreur servient dans le système secondaire (3) même lorsqu'aucune erreur n'est survenue dans la fonction de véhicule (12).
